# EUROPÄISCHE PATENTANMELDUNG

(11) **EP 3 439 265 A1**
(43) Veröffentlichungstag der Anmeldung: **06.02.2019**
(21) Anmeldenummer: 18184885.4
(22) Anmeldetag: 23.07.2018
(51) Int. Cl.: H04L 29/06, B62D 1/28, B66F 9/06

(54) **VERFAHREN ZUM PARAMETRIEREN EINES FAHRERLOSEN TRANSPORTFAHRZEUGS, FAHRERLOSES TRANSPORTFAHRZEUG UND SYSTEM DAMIT**

(30) Priorität: 04.08.2017 DE 102017213566
(71) Anmelder: Robert Bosch GmbH, 70442 Stuttgart (DE)
(72) Erfinder: Schild, Johannes, 74232 Abstatt (DE)
(74) Vertreter: Thürer, Andreas

(57) **Zusammenfassung**

Die Erfindung betrifft ein Verfahren zum Parametrieren eines fahrerlosen Transportfahrzeugs (100), wobei ein mittels kryptographischem Absicherungsmechanismus (131) abgesicherter Parametersatz (130') von dem fahrerlosen Transportfahrzeug (100) empfangen wird, wobei in dem fahrerlosen Transportfahrzeug (100) anhand des Parametersatzes entsprechende Variablen (140) parametriert werden, und wobei der kryptographische Absicherungsmechanismus (131) überprüft wird, und, wenn der kryptographische Absicherungsmechanismus (131) als korrekt erkannt wurde, ein Betrieb des fahrerlosen Transportfahrzeugs (100) freigegeben wird, sowie ein solches Transportfahrzeug (100) und ein System mit einem solchen Transportfahrzeug (100).

## Beschreibung

Die vorliegende Erfindung betrifft ein Verfahren zum Parametrieren eines fahrerlosen Transportfahrzeugs mit Sicherheitsfunktionen sowie ein solches fahrerloses Transportfahrzeug und ein System mit einem solchen fahrerlosen Transportfahrzeug.

### Stand der Technik

In Produktionsstätten insbesondere von Automobilherstellern oder Maschinenbauern sowie im Bereich der Lagerhaltung bzw. Lagerlogistik bei Großhändlern, Supermärkten oder dergleichen werden vielfach Transportfahrzeuge mit Kleinladungsträgern bzw. Kleinlastträgern (KLT) eingesetzt, um Bauteile oder Waren zu verschiedenen Produktionsstationen oder Lagerstandorten hin transportieren zu können. Bei solchen Transportfahrzeugen handelt sich dabei in aller Regel um fahrerlose Transportfahrzeuge (FTF), auch als sog. "Automatic Guided Vehicles "(AGVs) bezeichnet. Die einzelnen Kleinladungsträger können beispielsweise bis zu 25 kg schwer sein. Vielfach werden auch sogenannte "Routenzüge" zum Transportieren der Kleinladungsträger eingesetzt. Solche Transportfahrzeuge können dabei beispielsweise unter Verwendung von Robotermodulen bzw. Manipulatoren manuell automatisch beladen und entladen werden.

### Offenbarung der Erfindung

Erfindungsgemäß werden ein Verfahren zum Parametrieren eines fahrerlosen Transportfahrzeugs, Recheneinheiten, ein fahrerloses Transportfahrzeug und ein System mit den Merkmalen der unabhängigen Patentansprüche vorgeschlagen. Vorteilhafte Ausgestaltungen sind Gegenstand der Unteransprüche sowie der nachfolgenden Beschreibung.

Ein erfindungsgemäßes Verfahren dient zum Parametrieren eines fahrerlosen Transportfahrzeugs, und zwar insbesondere eines fahrerlosen Transportfahrzeugs mit Sicherheitsfunktionen (d.h. einem fahrerlosen Transportfahrzeug, das bestimmte Sicherheitsfunktionen aufweist, die über Parameter eingestellt werden können). Unter Sicherheitsfunktionen sind dabei insbesondere solche Funktion zu verstehen, die sicherheitskritisch sind und/oder (deshalb) vor unbefugter Manipulation geschützt werden sollten. Es wird nun ein mittels kryptographischem Absicherungsmechanismus abgesicherter Parametersatz von dem fahrerlosen Transportfahrzeug empfangen, woraufhin in dem fahrerlosen Transportfahrzeug anhand des abgesicherten Parametersatzes entsprechende Variablen parametriert werden. Bei diesen Variablen kann es sich insbesondere um solche Variablen handeln, die die Parameter enthalten und für entsprechende Sicherheitsfunktionen vorgesehen sind. Auf diese Weise wird das fahrerlose Transportfahrzeug also parametriert. Weiterhin wird nun der kryptographische Absicherungsmechanismus überprüft, und, wenn der kryptographische Absicherungsmechanismus als korrekt erkannt wurde, wird ein Betrieb des fahrerlosen Transportfahrzeugs freigegeben. Dies kann beispielsweise durch das Setzen eines "Gültig-Flags" erfolgen. Daraufhin kann das fahrerlose Transportfahrzeug also insbesondere in Bewegung gesetzt werden.

Das Verhalten von Maschinen und Geräten wie insbesondere den erwähnten fahrerlosen Transportfahrzeugen ist in vielen Anwendungen über Parameter konfigurierbar. Mehrere solcher fahrerloser Transportfahrzeuge bilden zusammen mit einem Backend, also einer zentralen, übergeordneten Recheneinheit, und geeigneter Infrastruktur ein fahrerloses Transportsystem (FTS). Die fahrerlosen Transportfahrzeuge erhalten über die zentrale Recheneinheit bzw. das Backend Transportaufträge und Informationen, z.B. über eine zentrale Abschaltung. Die Transportaufträge können sich auf bestimmte Routen mit unterschiedlichen Randbedingungen beziehen, z.B. mit oder ohne Steigung, Gewicht der Ladung, unterschiedliche zulässige Höchstgeschwindigkeit je Strecke, Strategie zur Auflösung von Begegnungssituationen und dergleichen.

Das fahrerlose Transportfahrzeug hat nun - neben ggf. anderen, nicht sicherheitsrelevanten Funktionen - vorzugsweise die erwähnten Sicherheitsfunktionen mit zugehörigen Variablen implementiert, die durch Parametrierung festgelegt sind. Hierzu zählt beispielsweise eine Schutzfeldgröße vor dem fahrerlosen Transportfahrzeug, die von einem Personendetektionssystem überwacht wird. Diese kann dann so ausgelegt werden, dass bei maximalem Gefälle der Strecke und maximaler Ladung eine Bremsung noch sicher möglich ist. Weitere solcher Variablen umfassen beispielsweise: eine Maximalgeschwindigkeit auf freier Strecke, eine reduzierte Geschwindigkeit im Bereich von Kreuzungen, eine reduzierte Geschwindigkeit auf engen Fahrwegen, eine reduzierte Geschwindigkeit in Quellen/Senken bei Rückwärtsfahrt, eine reduzierte Geschwindigkeit in Quellen/Senken bei Vorwärtsfahrt, eine Breite des Schutzfeldes in den vorgenannten. Situationen, eine Drehgeschwindigkeit in Kurven, eine Zeitdauer zwischen Signalisierung einer Richtungsänderung und der Richtungsänderung, eine Zeitdauer zwischen Warnung vor Anfahrt und der Anfahrt, eine Momentenbegrenzung der Antriebe, insbesondere separiert in verschiedene Betriebsmodi, eine Maximalgeschwindigkeit, eine Drehgeschwindigkeit und Timeouts bei manuellem (handgesteuertem) Betrieb, Timeouts bei Abbruch der Funkverbindung sowie eine Aktivierung von Zusatzfunktionen, wie z.B. freiem Kurvenfahren.

Herkömmlicherweise ist diese Parametrierung solcher Variablen von Sicherheitsfunktionen, also eine sicherheitsbezogenen Parametrierung, entweder nur durch den Fahrzeughersteller änderbar, oder aber auch durch den Betreiber bzw. Verwender des fahrerlosen Transportfahrzeugs, dann jedoch nur durch gezielte Änderung am einzelnen Fahrzeug. Jedenfalls ist eine solche Parametrierung üblicherweise dauerhaft und auf die theoretisch auftretenden Extremsituationen ausgelegt.

Mit der Erfindung ist es nun jedoch möglich, eine sicherheitsbezogene Parametrierung auch unabhängig vom Hersteller und vor allem auch entfernt vom fahrerlosen Transportfahrzeug vorzunehmen. Durch die Verwendung eines kryptographischen Absicherungsmechanismus, der vorzugsweise eine Prüfsumme (CRC) und/oder einen kryptographischen, insbesondere asymmetrischen, Schlüssel umfassen kann, ist zudem die Verwendung eines unsicheren Backends bzw. einer unsicheren zentralen Recheneinheit möglich. Dies erleichtert die Umsetzung erheblich. Ebenso muss auch eine Übertragung, die vorzugsweise drahtlos erfolgen kann, nicht abgesichert sein. Für einen solchen Fall in der ISO 13849-1:2015 festgelegte Anforderungen zur Parametrierung können dennoch eingehalten werden.

Insgesamt wird auf diese Weise eine bisher nicht mögliche Flexibilität bei der Definition von Transportrouten und neuen Anwendungsfällen erreicht. Es werden eine Ersparnis einer lokalen Re-Konfiguration jedes einzelnen Fahrzeugs sowie ein geringerer Aufwand in der Einrichtung ermöglicht. Zudem wird eine bessere Performance erreicht, z.B. ist kein unnötig großes Schutzfeld in Anwendungsfällen ohne Gefällstrecken oder mit leichter Beladung vorzusehen. Ebenso sind ggf. höhere Geschwindigkeiten in solchen Anwendungsfällen möglich, was insgesamt zu einer besseren Produktivität und Effizienz führt.

Denkbar ist zudem, dass neben dem Parametersatz für die Sicherheitsfunktionen auch Daten und/oder Parameter für andere, d.h. nicht sicherheitsrelevante Funktionen, beispielsweise die erwähnten Transportaufträge, auf die gleiche Weise mittels kryptographischem Absicherungsmechanismus abgesichert und übertragen bzw. empfangen werden. Hierunter fallen beispielsweise Start, Ziel, sowie Wegpunkte von Aufträgen.

Vorzugsweise wird zudem, wenn der kryptographische Absicherungsmechanismus nicht als korrekt erkannt wurde, der Betrieb des fahrerlosen Transportfahrzeugs nicht freigegeben, sondern insbesondere gesperrt. Dies kann beispielsweise durch das Setzen eines "Nicht-Gültig-Flags" oder aber zumindest das Nicht-Setzen eines "Gültig-Flags" erfolgen. Auf diese Weise kann verhindert werden, dass, beispielsweise im Falle versuchter Manipulation, gefährliche Situationen überhaupt erst entstehen können. Das fahrerlose Transportfahrzeug verbleibt damit im sicheren Zustand.

Bevorzugt ist es auch, dass, wenn der kryptographische Absicherungsmechanismus nicht als korrekt erkannt wurde, eine Rückmeldung an einen Sender des Parametersatzes, also insbesondere die erwähnte zentrale Recheneinheit bzw. das Backend, gegeben wird. Auf diese Weise kann beispielsweise untersucht werden, ob eine Manipulation oder ein anderer Fehler vorliegen.

Vorteilhafterweise wird der abgesicherte Parametersatz zusammen mit einem Transportauftrag von dem fahrerlosen Transportfahrzeug empfangen, wobei, wenn der Betrieb des fahrerlosen Transportfahrzeugs freigeben wurde, der Transportauftrag gestartet wird. Mittels eines solchen Transportauftrags können, wie bereits erwähnt, bestimmte Routen vorgeben werden, die das fahrerlose Transportfahrzeug abzufahren hat. Ebenso kann darin festgelegt sein, welche Beladungen und/oder Entladungen vorzunehmen sind. Durch die gemeinsame Übermittlung bzw. den gemeinsamen Empfang des Transportauftrags und des Parametersatzes kann die nötige Übertragungsdauer niedrig gehalten werden.

Vorzugsweise werden die Variablen in dem fahrerlosen Transportfahrzeug mittels eines Fehlererkennungsmechanismus, insbesondere einer ECC-Prüfsumme, abgesichert. Damit können beispielsweise etwaige zufällige Hardware-Fehler oder elektromagnetische Störungen erkannt werden. Im Falle eines erkannten Fehlers kann dann auch der Betrieb des fahrerlosen Transportfahrzeugs verhindert bzw. nicht freigegeben werden.

Es ist weiterhin von Vorteil, wenn mittels einer zentralen Recheneinheit, also beispielsweise des erwähnten Backends, der Parametersatz mittels des kryptographischen Absicherungsmechanismus abgesichert wird, oder der mittels des kryptographischen Absicherungsmechanismus abgesicherte Parametersatz von außen empfangen wird und dann an das fahrerlose Transportfahrzeug übertragen wird. Dies ermöglicht, wie schon erwähnt, eine einfache Übertragung, während die zentrale Recheneinheit selbst nicht abgesichert sein muss.

Zweckmäßig ist es auch, wenn der abgesicherte Parametersatz automatisch in Abhängigkeit von wenigstens einem äußeren Parameter, insbesondere einem Transportauftrag und/oder einer Umweltbedingung und/oder einer Uhrzeit, an das fahrerlose Transportfahrzeug übertragen wird. So können beispielsweise die Parameter in Abhängigkeit von einem maximalen Gefälle einer zu fahrenden Strecke vorgegeben werden. Insbesondere kann dies durch die automatische Übermittlung besonders schnell und effizient erfolgen. Ebenso denkbar ist es beispielsweise, bei geänderten Sichtbedingungen die Parameter automatisch anzupassen.

Eine erfindungsgemäße Fahrzeug-Recheneinheit für ein fahrerloses Transportfahrzeug, z.B. ein Steuergerät eines fahrerlosen Transportfahrzeugs, ist, insbesondere programmtechnisch, dazu eingerichtet, ein erfindungsgemäßes Verfahren hinsichtlich derjenigen Schritte, die von dem fahrerlosen Transportfahrzeug ausgeführt werden, durchzuführen.

Gegenstand der Erfindung ist weiterhin ein fahrerloses Transportfahrzeug mit einer solchen erfindungsgemäßen Fahrzeug-Recheneinheit. Damit ist also auch das fahrerlose Transportfahrzeug dazu eingerichtet, ein erfindungsgemäßes Verfahren hinsichtlich derjenigen Schritte, die von dem fahrerlosen Transportfahrzeug ausgeführt werden, durchzuführen.

Gegenstand der Erfindung ist weiterhin eine zentrale Recheneinheit, die dazu eingerichtet ist, einen mittels kryptographischem Absicherungsmechanismus abgesicherten Parametersatz an ein fahrerloses Transportfahrzeug zu übertragen. Bei dieser zentralen Recheneinheit kann es sich also um eine zentrale, übergeordnete Recheneinheit bzw. das erwähnte Backend handeln, wie bereits mehrmals erwähnt.

Eine solche zentrale Recheneinheit ist vorzugsweise weiterhin dazu eingerichtet, den Parametersatz mittels des kryptographischen Absicherungsmechanismus abzusichern oder den mittels des kryptographischen Absicherungsmechanismus abgesicherten Parametersatz von außen zu empfangen, bevor der Parametersatz an das fahrerlose Transportfahrzeug übertragen wird. Vor der Übertragung an das fahrerlose Transportfahrzeug kann der abgesicherte Parametersatz vorzugsweise auch in der zentralen Recheneinheit zwischengespeichert werden. So kann beispielsweise eine manuelle Überprüfung erfolgen. Zweckmäßig ist es auch, wenn diese zentrale Recheneinheit zudem dazu eingerichtet ist, den abgesicherten Parametersatz automatisch in Abhängigkeit von wenigstens einem äußeren Parameter, insbesondere einem Transportauftrag und/oder einer Umweltbedingung und/oder einer Uhrzeit, an das fahrerlose Transportfahrzeug zu übertragen.

Gegenstand der Erfindung ist weiterhin ein System mit einem oder mehreren fahrerlosen Transportfahrzeugen und einer erfindungsgemäßen zentralen Recheneinheit. Hierzu sei angemerkt, dass jedes von mehreren solcher fahrerlosen Transportfahrzeuge zumindest hinsichtlich der Übertragung bzw. des Empfangens des Parametersatzes gleichartig ausgebildet sein kann. Für eine Kommunikation zwischen der zentralen Recheneinheit und dem einen bzw. den mehreren fahrerlosen Transportsystemen kann eine geeignete Kommunikationsstruktur vorgesehen sein, beispielsweise ein drahtloses Kommunikationsnetz. Insgesamt kann es sich bei einem solchen System dann um ein fahrerloses Transportsystem handeln, wie es eingangs genannt wurde.

Hinsichtlich der Vorteile der erfindungsgemäßen zentralen Recheneinheit sowie des Systems sei zur Vermeidung von Wiederholungen auf obige Ausführungen verwiesen, die hier entsprechend gelten.

Auch die Implementierung des Verfahrens und/oder der von der zentralen Recheneinheit auszuführenden Schritte in Form eines Computerprogramms ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

- Figur 1: zeigt schematisch ein erfindungsgemäßes System in bevorzugter Ausführungsform mit einer zentralen Recheneinheit und zwei fahrerlosen Transportfahrzeugen.
- Figur 2: zeigt schematisch einen Ablauf eines erfindungsgemäßen Verfahrens in bevorzugter Ausführungsform.

### Detaillierte Beschreibung der Zeichnung

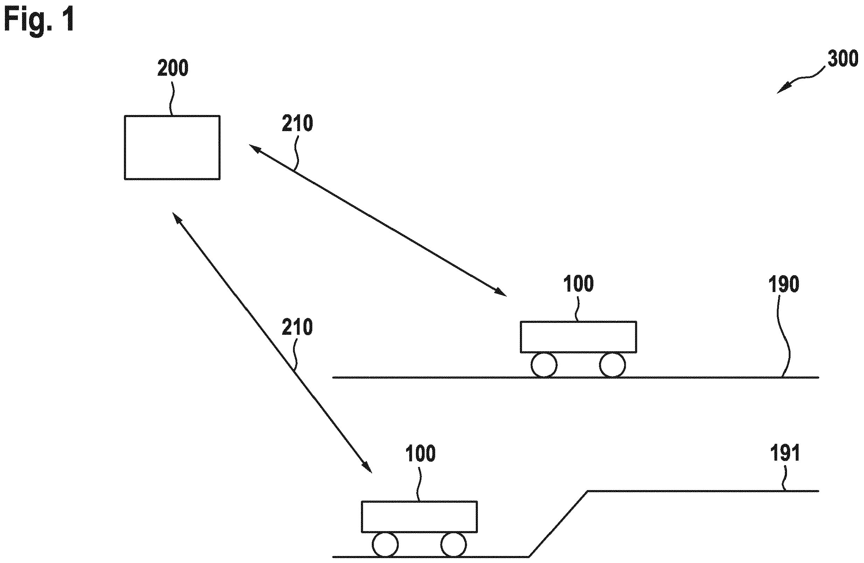

In Figur 1 ist schematisch ein erfindungsgemäßes System 300 in bevorzugter Ausführungsform dargestellt. Das System 300 umfasst hier eine erfindungsgemäße zentrale Recheneinheit 200 in bevorzugter Ausführungsform sowie zwei erfindungsgemäße fahrerlose Transportfahrzeuge 100 in jeweils bevorzugter Ausführungsform.

Die zentrale Recheneinheit 200, bei der es sich um ein Backend zur Steuerung und Überwachung der fahrerlosen Transportfahrzeuge 100 handeln kann, ist über ein Kommunikationssystem 210, das insbesondere drahtlos ausgebildet sein kann, mit den fahrerlosen Transportfahrzeugen 100 verbunden. Auf diese Weise ist eine Datenübertragung bzw. eine Kommunikation zwischen den einzelnen fahrerlosen Transportfahrzeugen 100 und der zentralen Recheneinheit 200 möglich. Insgesamt kann es sich bei dem System 300 damit um ein fahrerloses Transportsystem handeln.

Es versteht sich, dass auch weitere solcher fahrerlosen Transportfahrzeuge vorgesehen sein können. Die fahrerlosen Transportfahrzeuge können dabei gleichartig ausgebildet sein. Denkbar ist jedoch auch, dass die fahrerlosen Transportfahrzeuge unterschiedliche Größen bzw. Längen und/oder Beladungen aufweisen können. Die fahrerlosen Transportfahrzeuge können zudem einen bereits erwähnten Manipulator oder dergleichen aufweisen, um eine automatische Beladung bzw. Entladung vornehmen zu können.

Weiterhin sind nun für die fahrerlosen Transportfahrzeuge 100 zwei verschiedene Transportrouten 190 und 191 gezeigt, die hier rein schematisch dargestellt sind. Bei einer solchen Transportroute kann es sich um eine für das jeweilige fahrerlose Transportfahrzeug vorgebbare, abzufahrende Strecke in einem Lager oder dergleichen handeln. Hierbei können beispielsweise auch Strecken mit einem Gefälle und/oder einer Steigung auftreten. Insbesondere können die Transportrouten jederzeit neu definiert und vorgegeben werden.

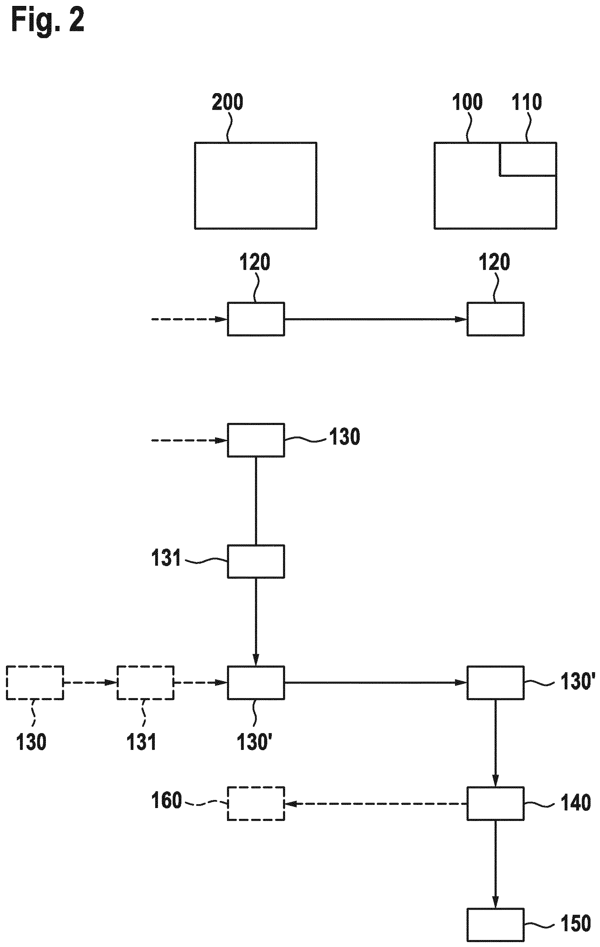

In Figur 2 ist nun schematisch ein Ablauf eines erfindungsgemäßen Verfahrens in bevorzugter Ausführungsform dargestellt. Hierzu sind die zentrale Recheneinheit 200 sowie ein fahrerloses Transportsystem 100 mit zugeordneter Fahrzeug-Recheneinheit 110 dargestellt, womit einzelne Schritte des Verfahrens durchgeführt werden können.

Zunächst kann in der zentralen Recheneinheit 200 ein Transportauftrag 120 erstellt werden. Denkbar ist auch, dass der Transportauftrag 120 von außerhalb an die zentrale Recheneinheit 200 übermittelt wird. Ein solcher Transportauftrag kann beispielsweise in Form einer Liste Daten über eine abzufahrende Strecke, wie sie in Bezug auf Figur 1 erläutert wurde, enthalten. Zudem kann der Transportauftrag beispielsweise Positionen entlang der Strecke enthalten, an welchen das fahrerlose Transportfahrzeug anhalten soll, um Ladungsträger bzw. Kleinladungsträger aufzuladen und/oder abzuladen.

Weiterhin kann in der zentralen Recheneinheit 200 ein Parametersatz 130 erstellt werden. Dieser kann dann unter Verwendung eines kryptographischen Absicherungsmechanismus 131 abgesichert werden, um so einen abgesicherten Parametersatz 130' zu erhalten. Denkbar ist auch, dass der Parametersatz 130 nicht in der zentralen Recheneinheit 130 erstellt, sondern dorthin von außen übertragen und dann dort nur abgesichert wird. Denkbar ist aber auch, dass der bereits abgesicherte Parametersatz 130' von außerhalb an die zentrale Recheneinheit 200 übermittelt wird. Dann kann die Absicherung unter Verwendung des kryptographischen Absicherungsmechanismus 131 bereits vor der Übermittlung an die zentrale Recheneinheit 200 erfolgt sein.

Insbesondere in diesem letzten Fall können weniger Sicherheitsanforderungen an die zentrale Recheneinheit 200 bestehen als in anderen Fällen. Fehler in der zentralen Recheneinheit können in der Folge. nicht zu einer Verfälschung des Parametersatzes und Übertragung mit zum verfälschten Parametersatz konsistenter Absicherung führen.

Im Fall einer Absicherung innerhalb der zentralen Recheneinheit 200 sind andere Überprüfungsmaßnahmen denkbar, z.B. Speicherung des abgesicherten Parametersatzes in der Recheneinheit 200 und manuelle Überprüfung der Korrektheit des Parametersatzes durch einen Probelauf eines Fahrzeugs. Hier ist relevant, dass die Absicherung zeitlich vor der manuellen Überprüfung erfolgt und die vorbereiteten Parametersätze danach unverändert bleiben.

Ein solcher kryptographischer Absicherungsmechanismus kann insbesondere die Verwendung einer Prüfsumme (CRC, Cyclic Redundancy Check) und/oder eines kryptographischen Schlüssels umfassen. Ein solcher kryptographischer Schlüssel kann zudem asymmetrisch sein. Solche Absicherungsmechanismen sind an sich bekannt und sollen an dieser Stelle deshalb nicht näher erläutert werden.

Der abgesicherte Parametersatz 130' wird nun von der zentralen Recheneinheit 200, insbesondere unter Verwendung des zuvor erwähnten Kommunikationsnetzes, an das fahrerlose Transportfahrzeug 100 übertragen. Dies kann insbesondere zusammen mit der Übertragung des Transportauftrages 120 erfolgen.

In dem fahrerlosen Transportfahrzeug 100 bzw. in der darin vorgesehenen Fahrzeug-Recheneinheit 110 werden nun entsprechende Variablen 140, für die die Parameter des Parametersatzes gebraucht werden, anhand des abgesicherten Parametersatzes 130' parametriert.

Weiterhin wird der kryptographische Absicherungsmechanismus überprüft bzw. es wird überprüft, ob der Parametersatz ordnungsgemäß abgesichert wurde. Hierzu können beispielsweise die Prüfsumme bzw. der Schlüssel geprüft werden. Wenn der kryptographische Absicherungsmechanismus als korrekt erkannt wurde, kann beispielsweise ein Gültig-Flag 150 gesetzt werden, um so den Betrieb des fahrerlosen Transportfahrzeugs freizugeben und dann auch zu starten. Denkbar ist dabei zuvor auch noch die Durchführung einer Fehlererkennung bei den Variablen 140, um etwaige Hardware-Fehler oder dergleichen auszuschließen.

Wird hingegen der kryptographische Absicherungsmechanismus nicht als korrekt erkannt, so wird der Betrieb des fahrerlosen Transportfahrzeugs nicht freigegeben und es kann eine Rückmeldung 160 an die zentrale Recheneinheit 200 übertragen werden. Dort kann dann beispielsweise die Ursache ermittelt werden.

Es ist nun möglich, nicht nur mit jedem neuen Transportauftrag immer einen abgesicherten Parametersatz an das fahrerlose Transportfahrzeug zu übertragen. Vielmehr kann auch während der Abarbeitung des Transportauftrags automatisch ein oder mehrmals ein neuer, abgesicherter Parametersatz an das fahrerlose Transportfahrzeug übertragen werden. Dies ist beispielsweise dann zweckmäßig, wenn sich gewisse äußere Parameter bzw. Randbedingungen wie das Wetter ändern, die eine Anpassung der Parameter zweckmäßig erscheinen lassen. Durch die Absicherung des Parametersatzes ist dabei immer ein Schutz vor Manipulation sichergestellt.

Es versteht sich, dass die Transportaufträge für verschiedene fahrerlose Transportfahrzeuge in aller Regel unterschiedlich sind, beispielsweise hinsichtlich der Transportroute und/oder der aufzuladenden bzw. abzuladenden Lastträger.

## Patentansprüche

1. Verfahren zum Parametrieren eines fahrerlosen Transportfahrzeugs (100),
wobei ein mittels kryptographischem Absicherungsmechanismus (131) abgesicherter Parametersatz (130') von dem fahrerlosen Transportfahrzeug (100) empfangen wird,
wobei in dem fahrerlosen Transportfahrzeug (100) anhand des Parametersatzes entsprechende Variablen (140) parametriert werden, und
wobei der kryptographische Absicherungsmechanismus (131) überprüft wird, und, wenn der kryptographische Absicherungsmechanismus (131) als korrekt erkannt wurde, ein Betrieb des fahrerlosen Transportfahrzeugs (100) freigegeben wird.

2. Verfahren nach Anspruch 1, wobei, wenn der kryptographische Absicherungsmechanismus (131) nicht als korrekt erkannt wurde, der Betrieb des fahrerlosen Transportfahrzeugs (100) nicht freigegeben, insbesondere gesperrt, wird.

3. Verfahren nach Anspruch 1 oder 2, wobei, wenn der kryptographische Absicherungsmechanismus (131) nicht als korrekt erkannt wurde, eine Rückmeldung (160) an einen Sender (200) des abgesicherten Parametersatzes (130') gegeben wird.

4. Verfahren nach einem der vorstehenden Ansprüche, wobei der abgesicherte Parametersatz (130') zusammen mit einem Transportauftrag (120) von dem fahrerlosen Transportfahrzeug (100) empfangen wird, und wobei, wenn der Betrieb des fahrerlosen Transportfahrzeugs (100) freigeben wurde, der Transportauftrag (120) gestartet wird.

5. Verfahren nach einem der vorstehenden Ansprüche, wobei als kryptographischer Absicherungsmechanismus (131) eine Prüfsumme und/oder ein kryptographischer Schlüssel, insbesondere ein asymmetrischer Schüssel, verwendet werden.

6. Verfahren nach einem der vorstehenden Ansprüche, wobei die Variablen (140) in dem fahrerlosen Transportfahrzeug mittels eines Fehlererkennungsmechanismus, insbesondere einer ECC-Prüfsumme, abgesichert werden.

7. Verfahren nach einem der vorstehenden Ansprüche, wobei mittels einer zentralen Recheneinheit (200) der Parametersatz (130) mittels des kryptographischen Absicherungsmechanismus (131) abgesichert oder der mittels des kryptographischen Absicherungsmechanismus (131) abgesicherten Parametersatz (130') von außen empfangen wird, und an das fahrerlose Transportfahrzeug (100) übertragen wird.

8. Verfahren nach Anspruch 7, wobei der abgesicherte Parametersatz (130') automatisch in Abhängigkeit von wenigstens einem äußeren Parameter, insbesondere einem Transportauftrag (120) und/oder einer Umweltbedingung und/oder einer Uhrzeit, an das fahrerlose Transportfahrzeug übertragen wird.

9. Fahrzeug-Recheneinheit (110) für ein fahrerloses Transportfahrzeug (100), die dazu eingerichtet ist, ein Verfahren nach einem der Ansprüche 1 bis 6 durchzuführen.

10. Fahrerloses Transportfahrzeug (100) mit einer Fahrzeug-Recheneinheit (110) nach Anspruch 9.

11. Zentrale Recheneinheit (200), die dazu eingerichtet ist, einen mittels kryptographischem Absicherungsmechanismus (131) abgesicherten Parametersatz (130') an ein fahrerloses Transportfahrzeug (100) zu übertragen.

12. Zentrale Recheneinheit (200) nach Anspruch 11, die weiterhin dazu eingerichtet ist, den Parametersatz (130) mittels des kryptographischen Absicherungsmechanismus (131) abzusichern, oder den mittels des kryptographischen Absicherungsmechanismus (131) abgesicherten Parametersatz (130') von außen zu empfangen und vorzugsweise jeweils zwischenzuspeichern, bevor der abgesicherte Parametersatz (130') an das fahrerlose Transportfahrzeug (100) übertragen wird.

13. Zentrale Recheneinheit (200) nach Anspruch 11 oder 12, die weiterhin dazu eingerichtet ist, den abgesicherten Parametersatz (130') automatisch in Abhängigkeit von wenigstens einem äußeren Parameter, insbesondere einem Transportauftrag (120) und/oder einer Umweltbedingung und/oder einer Uhrzeit, an das fahrerlose Transportfahrzeug (100) zu übertragen.

14. System (300) mit einem oder mehreren fahrerlosen Transportfahrzeugen (100) nach Anspruch 9 und einer zentralen Recheneinheit (200) nach einem der Ansprüche 11 bis 13.
